**Europäisches Patentamt**

(19) **European Patent Office**

**Office européen des brevets**

(11) Numéro de publication: **0 095 958**
**B1**

(12) **FASCICULE DE BREVET EUROPÉEN**

(45) Date de publication du fascicule du brevet:
24.09.86

(51) Int. Cl.⁴: **H 02 K 3/50,** H 02 K 5/22, H 02 K 5/128, H 02 K 15/00

(21) Numéro de dépôt: **83400985.4**

(22) Date de dépôt: **17.05.83**

(54) Moteur électrique à stator bobiné, et son procédé de fabrication.

(30) Priorité: **27.05.82 FR 8209256**

(43) Date de publication de la demande:
**07.12.83 Bulletin 83/49**

(45) Mention de la délivrance du brevet:
**24.09.86 Bulletin 86/39**

(84) Etats contractants désignés:
**BE CH DE GB IT LI NL**

(56) Documents cité:
**EP-A-0 017 075**
**FR-A-1 514 808**
**FR-A-2 407 596**
**FR-A-2 437 724**
**FR-A-2 453 511**
**US-A-3 869 629**
**US-A-3 984 712**
**US-A-4 133 598**

**PATENTS ABSTRACTS OF JAPAN, vol. 6, no. 32(E-96)(910), 26 février 1982**

(73) Titulaire: **POMPES SALMSON, Tour Corosa 44 Avenue de Chatou, F-92500 Rueil Malmaison (FR)**

(72) Inventeur: **Delvallez, Michel, THOMSON- CSF SCPI 173, bld Haussmann, F-75379 Paris Cedex 08 (FR)**
Inventeur: **Trian, Hervé, THOMSON- CSF SCPI 173, bld Haussmann, F-75379 Paris Cedex 08 (FR)**

(74) Mandataire: **Hirsch, Marc- Roger, 34 rue de Bassano, F-75008 Paris (FR)**

## Description

La présente invention concerne un moteur électrique et son procédé de fabrication. Les moteurs du domaine de l'invention comportent un stator bobiné, dont les fils de sortie doivent être connectés à un organe de sélection et d'alimentation du bobinage, par exemple pour faire varier la vitesse, le couple ou le sens de rotation du moteur au gré de son utilisateur.

Les moteurs électriques sont des appareils fabriqués en grande série. Il est donc particulièrement important pour que le prix de fabrication soit réduit, qu'ils soient d'une constitution simple notamment que le nombre de pièces les constituant soit réduit à un minimum. Le moteur selon l'invention satisfait à ces conditions dans une plus grande mesure que les moteurs connus jusqu'à présent.

Dans l'art antérieur, pour réaliser la commande électrique des enroulements statoriques ainsi que leur alimentation on a disposé un circuit imprimé solidaire du stator ou d'une carcasse statorique. Un tel art antérieur est décrit dans les demandes EP - A - 17 075 et FR - A - 2 437 724. Mais les extrémités des fils sont flottantes et une telle situation est dangereuse au montage.

Le moteur selon l'invention est caractérisé en ce que les fils sont tendus sur une face d'un plateau, le plateau réalisant un maintien et/ou un formage du chignon de sortie des fils de bobine. Un tel plateau contribue à la diminution du nombre de composants du moteur ce qui entraîne, en plus de la diminution du prix de fabrication, une meilleure fiabilité.

L'art antérieur présente aussi l'inconvénient qu'il faut braser ou souder les extrémités des fils statoriques à un circuit imprimé ou à des bornes. L'invention permet d'utiliser efficacement une autre technologie de connexion électrique.

Dans une réalisation le plateau a la forme d'un disque à l'extrémité d'un manchon cylindrique enfoncé à force dans l'ouverture statorique.

Le plateau est par exemple en un matériau isolant obtenu par moulage.

Dans une réalisation le plateau sert au guidage des fils sortant du stator et un bornier est fixé à ce plateau. Les extrémités des fils guidés sur le plateau sont maintenues sur le bornier. Ce bornier est, dans un exemple de réalisation la partie femelle d'un connecteur dans lequel peut être enfiché un circuit imprimé.

Ces caractéristiques et d'autres encore, vont être développées dans la description illustrée du dessin qui comporte:
- la figure 1: une vue schématique en coupe d'un moteur selon l'invention,
- la figure 2: une vue en perspective d'un stator bobiné après formage avant l'opération d'imprégnation du bobinage,
- les figures 3a et 3b: un schéma dun connecteur selon l'invention.

Selon l'invention, les fils de sortie des bobines statoriques sont rassemblés sur un plateau porteur. Le plateau est disposé dans un plan perpendiculaire à l'axe du moteur. Il est fixé au moteur du côté où les fils à connecter ressortent du chignon.

Le plateau porte aussi sur sa périphérie un connecteur qui permet de relier chaque fil de bobine à une piste d'une plaquette de circuit imprimé. La plaquette est amovible et enfichable dans le connecteur à volonté. Elle permet d'alimenter le moteur en alimentation électrique et de changer ses caractéristiques électromécaniques.

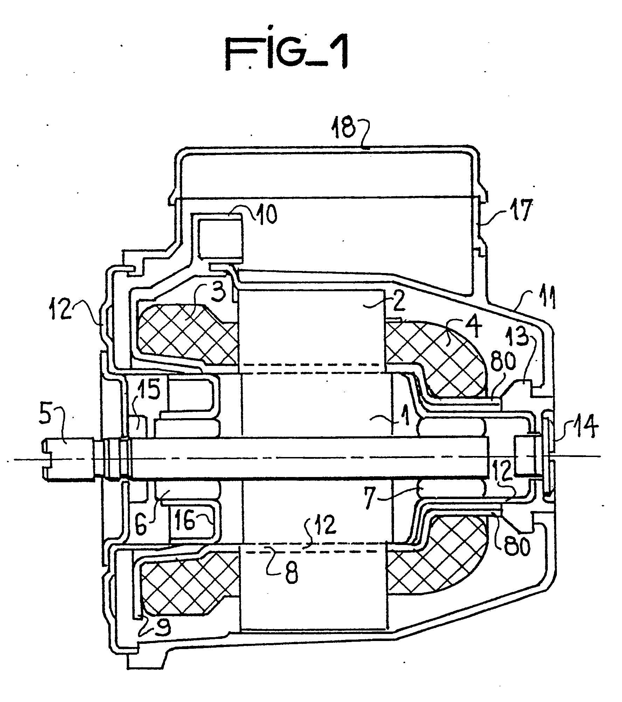

A la figure 1, est représenté un moteur électrique selon l'invention. Un tel moteur comporte un rotor 1 solidaire d'un arbre 5 monté à l'intérieur d'un alésage statorique cylindrique. Un bobinage 3, 4 est installé dans les encoches statoriques. Ces encoches permettent de maintenir et isoler chacune des bobines qui composent le bobinage statorique 3, 4. De part et d'autre (de la carcasse 2) du stator, le bobinage présente deux formes bouffantes, constituées par l'enchevêtrement des têtes ou extrémités des bobines. Quand le bobinage est important, il est nécessaire que ces extrémités du bobinage soient maintenues. Pour cela, on réalise par pressage, des chignons 3 et 4. On appelle ici, chignon "supérieur", le chignon d'où sortent les extrémités des fils de chacune des bobines. Chaque bobine a la forme d'un solénoide plat composé d'un grand nombre de spires. Chaque bobine a donc une extrémité de fil d'entrée et une extrémité de fil de sortie.

A l'insertion du bobinage, le chignon 4 a approximativement la forme d'une coupole sphérique. Ce chignon sera laissé brut d'insertion. En effet, les spires étant tendues à l'insertion du bobinage, un formage du seul chignon 3 supérieur est suffisant pour conserver une tension sur les fils du chignon 4 et pour en assurer une tenue mécanique convenable. Le formage du chignon supérieur est réalisé par l'introduction à force dans l'alésage statorique d'une matrice 100. Cette matrice comporte principalement un plateau ou coupelle 9 relié à un corps cylindrique 8 qui pénètre à l'intérieur de l'alésage statorique. Dans un mode d'exécution, le corps cylindrique 8 pénètre à l'intérieur des encoches statoriques de façon à dégager l'entrefer stator-rotor. Dans ce cas, le corps 8 peut servir de câle de fond dencoche pour maintenir chaque bobine dans les encoches. D'une manière générale, le corps 8 sert de moyen de fixation permanente au plateau 9 sur le stator du côté du chignon supérieur 3 qu'il permet de former.

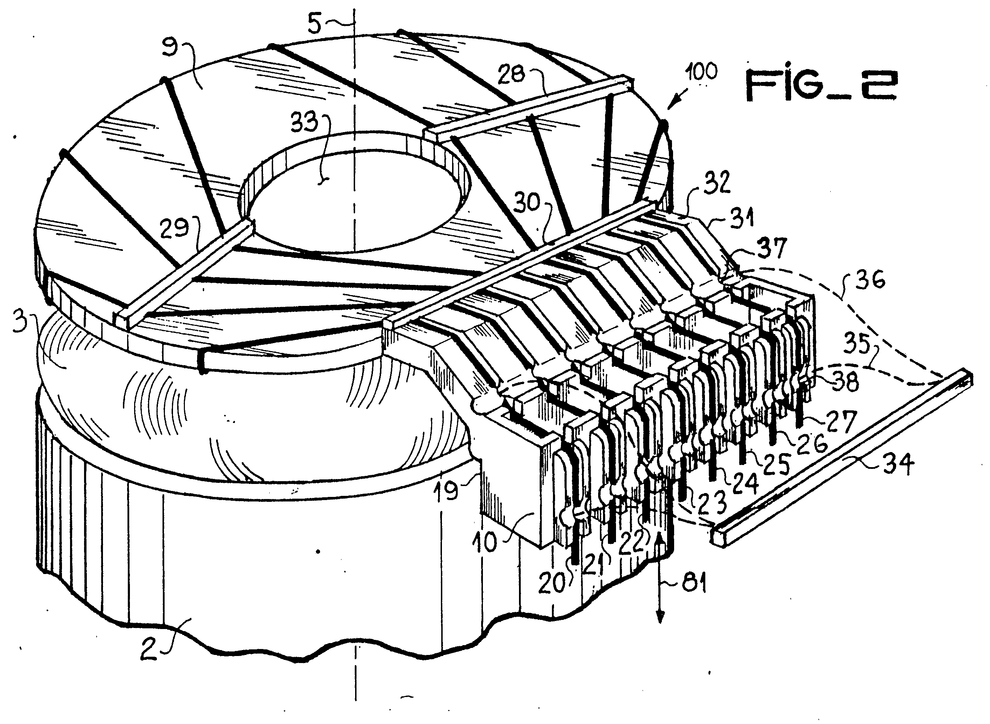

D'autre part la matrice 100 se termine par un cylindre 80 d'un diamètre plus petit que celui du corps 8, qui pénètre à l'intérieur du chignon 4 de façon à lui ménager une ouverture à travers laquelle l'arbre-moteur 5 peut passer. Le palier 7 est monté à force dans la partie rétrécie 80 du corps 8 au niveau de l'ouverture dans le chignon inférieur 4. Enfin des moyens détanchéité 13, 14 sont disposés à l'arrière du moteur c'est-à-dire du côté du chignon inférieur 4, sur sa carcasse extérieure 11 de façon à assurer une bonne étanchéité du bloc moteur. Ces moyens peuvent comporter un joint étanche 13 de forme toroïdale et une vis 14 fixée à la carcasse 11. L'arbre moteur 5 est de l'autre côté porté par un palier 6 fixé à un joint porteur 16. L'étanchéité à l'avant du moteur est complétée par un joint 15. Enfin, le plateau 9 de la matrice de formage est lié à un bornier 10. Le bornier 10 est porté par la périphérie du plateau 9. Il est rabattu le long de la carcasse 11 du moteur. Les différents fils libres des bobines statoriques qui sortent du côté du chignon supérieur 3 sont fixés à la coupelle et transmis au bornier 10 ainsi qu'il est montré à la figure 2.

A la figure 2 est représenté un stator bobiné monté selon l'invention. Sur la carcasse 2 a été monté le bobinage statorique dont on voit le chignon supérieur 3. La matrice de formage 100 est visible par la partie supérieure du plateau 9. Huit fils statoriques sont visibles correspondant aux extrémités d'entrée et de sortie de quatre bobines insérées dans les encoches du stator 2. Les extrémités de ces fils sont montées dans le bornier 10. Les fils 20-27 sont fixés par des moyens de fixation 28-30 de façon à être rigidement tenus en place quelles que soient les manipulations mécaniques sur le moteur. Le bornier 10 est relié au plateau 9 proprement dit par un support coudé 31 qui permet de ramener la direction de connexion 81 parallèlement à l'axe du moteur. Les extrémités 20-27 des fils statoriques sont maintenues par deux séries de sertissage à chaud. Ces sertissages à chaud déforment les bord des canaux tracés sur le bornier 10 et son support 31. Ils sont réalisés par une pression exercée par une électrode chauffante 34 dirigée successivement selon les flèches 35 et 36. Les fils 20-27 sont ainsi maintenus à l'intérieur des canaux. D'autre part, les moyens de fixation des fils 20-27 au plateau 9 comportent des barres 28-30 percées de trous cylindriques qui permettent le passage et la fixation des fils tendus sur la coupelle. Chaque fil est issu du chignon et est solidement maintenu dans son canal par une légère tension à l'extrémité des fils lors de l'opération de sertissage à chaud décrite. Les distances entre les fils sont telles qu'aucun croisement n'a lieu. De cette façon, on évite l'opération classique disolation des fils statoriques à leur sortie du chignon 3, que les techniques de l'art antérieur obligent à réaliser.

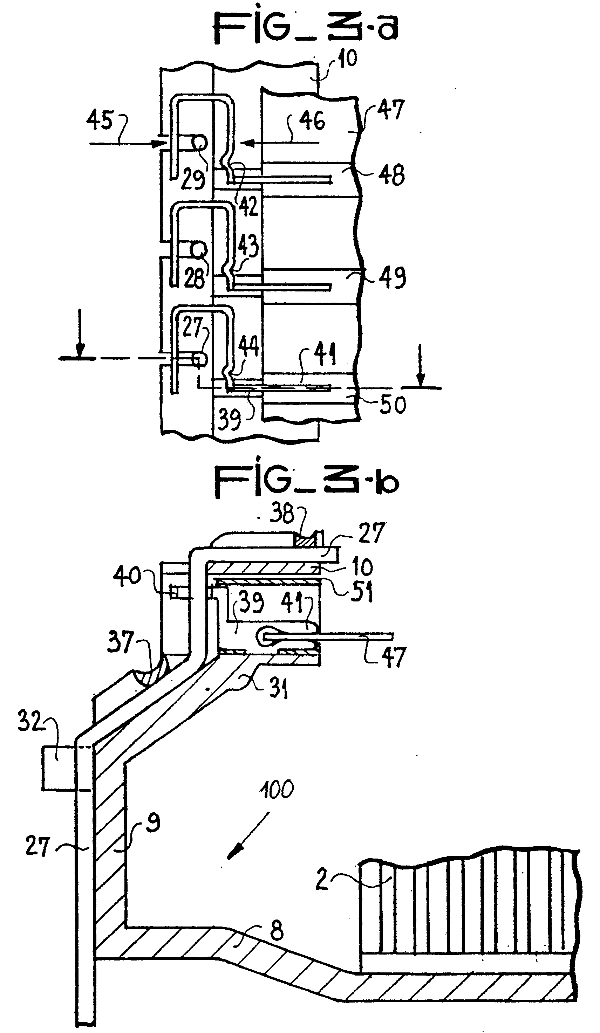

A la figure 3b, on a représenté une coupe selon plusieurs axes dune matrice selon l'invention. Dans le bas de la figure 3b, le corps 8 cylindrique a été coupé le long dun plan diamétral à l'arbre 5. Puis la coupe passe le long d'un fil 27 d'extrémité du bornier 10. Le fil 27 passe à l'intérieur d'un trou percé dans la baguette 32 de retenue. Il subit un premier coude d'entrée sur le support 31 et un deuxième coude à l'entrée du bornier 10. Enfin, en haut du bornier 10, le fil est de nouveau coudé. Les sertissages décrits, permettent de le maintenir à l'intérieur des canaux percés sur le bornier 10 et sur la coupelle 9.

Aux figures 3a et 3b, est represente un connecteur particulièrement adapté à l'invention. Un tel connecteur comporte un premier boîtier, qui est ici constitué par le bornier 10, dans lequel est fixé l'ensemble des fils du stator à relier à un circuit imprimé 47. Le connecteur comporte un deuxième boîtier 51 intérieur au bornier 10. Bornier 10 et boîtier 51 sont solidarisés par des moyens d'encliquetage non représentés.

Le deuxième boîtier 51 porte une pluralité de cosses conductrices comme la cosse 39 métallique conductrice d'une forme particulière. Cette cosse comporte deux parties 40 et 41. La première partie 40 comporte une forme particulière qui la rend apte à réaliser une connexion par enlèvement d'isolant. La seconde partie 41 comporte une partie de connexion à un circuit imprimé, au niveau d'une de ces pistes 48-50, par enfichage du circuit imprimé 47. La cosse est rigidement maintenue à l'intérieur du boîtier 51 par des moyens non représentés qui permettent d'empêcher, une fois la première partie 40 connectée au fil 27, d'exercer quelque contrainte que ce soit au fil isolé. En effet, si on ne prend cette précaution, des efforts peuvent être exercés sur le fil connecté quand on introduit ou quand on ressort le circuit imprimé 47 de la seconde partie 41 de la cosse 39. Comme les fils de bobines statoriques sont fragiles, cette précaution est nécessaire.

Dans un exemple de réalisation, la cosse 39 est du type dit a sertissage à chaud. La cosse 39, visible en vue de dessous à la figure 3a, comporte une première partie 40 de forme enveloppante qui permet d'entourer le fil 27 à connecter. Comme le fil 27 est isolé, il faut réaliser un enlevement de l'isolant. Pour cela, ainsi qu'il est représenté en haut de la figure 3a, deux électrodes de sertissage à chaud sont approchées de part et d'autre de la cosse à sertir selon les flèches 45 et 46. Une pression est exercée sur les électrodes chauffantes. L'isolant s'évapore à la chaleur et la cosse est sertie au fil assurant ainsi un contact permanent.

Cette technique rend nécessaire que la cosse présente:
- une bonne caractéristique thermique pour évacuer par conduction les calories développées au sertissage à chaud,
- une liaison absolument rigide de façon à ce que aucune contrainte ne soit appliquée au fil une fois la cosse sertie.

L'évacuation du flux thermique est assurée par un dimensionnement convenable de la seconde partie 41 de la cosse 39. Cette seconde partie 41 sert en effet de connexion par enfichage sur la plaquette de circuit imprimé 47. Celle-ci, présente, ainsi qu'il est visible à la figure 3a, un ensemble d'arrivées de pistes conductrices 47-50 placées sur la carte imprimée 47 de façon à ce que, la carte étant connectée, chaque cosse du connecteur 10, 51 soit enfichée sur la piste conductrice qui lui correspond.

La liaison rigide de la cosse est assurée dune part par une liaison rigide non représentée de la cosse au boîtier et d'autre part par un encliquetage inamovible et rigide du boîtier 51 au bornier 10.

Dans une forme de réalisation particulière, les cosses sont installées dans le boîtier 51. La partie arrière de la forme enveloppante de leur première partie de connexion au fil isolé est, à l'insertion du boîtier 51 dans le bornier 10, parallèle à la direction 81 de connexion représentée figure 2. Puis bornier 10 et boîtier 51 sont fixés rigidement l'un à l'autre. Enfin un premier outil de cambrage permet de replier chacune des parties arrières et ensuite le sertissage à chaud, cosse par cosse, est réalisé.

Dans un tel montage, il est possible de réaliser un montage entièrement automatique du connecteur.

Dans une variante, ainsi qu'il est visible figure 3a, chaque partie de connexion à chaud au fil comporte un bossage 42-44 qui s'oppose à l'effet de chasse du fil quand la pression des électrodes de sertissage est exercée.

D'autres formes de réalisation de cosses ont été décrites. Notamment, la partie 41 de connexion de la cosse au circuit imprimé 47 peut être du type lyre ainsi qu'il est représenté figure 3b. Dans une autre forme d'exécution, non représentée ici, la partie 41 est du type à lamelle. La cosse, d'une largeur sensiblement égale à celle de chaque piste 48-50 de la figure 3a, est recourbée dans le plan vertical de la figure 3b, de façon à former une lame de ressort, conductrice. La carte imprimée 47 pénètre dans le boîtier 51 entre le haut du boîtier et la lame de ressort. Dans une autre forme de réalisation de la partie de connexion de la cosse au fil isolé, la première partie de la cosse est du type à enlèvement mécanique d'isolant. La cosse porte du côté du fil, une fente coupante destinée à percer l'isolant et à établir le contact avec l'âme conductrice du fil isolé.

Dans le procédé de fabrication du moteur selon l'invention les bobines statoriques sont installées dans des encoches du stator 2 par l'alésage statorique 33. Puis les fils de sortie des bobines 20-27 sont dégagés. La matrice de formage 100 est introduite par le haut du chignon supérieur 3. Par pressage, on obtient simultanément le formage du chignon supérieur 3 et l'ouverture du chignon inférieur 4. Les fils sont alors installés dans les moyens de fixation sur la coupelle puis placés dans les canaux sur le bornier 10. Enfin on exerce une nouvelle tension sur les fils 20 à 27 à leurs extrémités libres. Après avoir fait un écrasement par sertissage à chaud des canaux selon la flèche 36 par la barre de sertissage à chaud 34, on obtient des étranglements sur le haut de chaque canal comme l'étranglement 37 sur le canal occupé par le fil 27 de la figure 2. Enfin, les fils sont de nouveau légèrement tendus et un écrasement à chaud des canaux comme l'étranglement 38 est encore réalisé selon la flèche 35 par la barre de sertissage à chaud 34. A la fin de cette opération, on peut réaliser l'opération d'imprégnation du bobinage.

Puis on installe le second boîtier 51 du connecteur.

Une fois le reste du moteur monté ainsi qu'il est connu dans l'art antérieur, il est possible de relier chaque fil isolé 20-27 à un circuit imprimé adaptateur. Un tel circuit imprimé permet de réaliser une configuration du bobinage qui correspond au fonctionnement désiré du moteur électrique. Notamment, les fils 20-27 ont été fixés sur la coupelle 9 de la façon la plus commode au point de vue de l'isolation en sortie du chignon. Le circuit imprimé permet de relier des bobines entre elles et à des composants spéciaux comme un inverseur, un condensateur, un sélecteur. La carte est aussi reliée à l'alimentation électrique du moteur.

**Revendications**

1. Moteur électrique à stator bobiné, comportant un plateau (9) solidaire du stator, disposé du côté de l'alésage statorique (33) où les extrémités des fils (20 - 27) ressortent, caractérisé en ce que les fils (20 - 27) sont tendus sur une face du plateau, le plateau (9) réalisant un maintien et/ou un formage du chignon (3) de sortie des fils de bobine.

2. Moteur selon la revendication 1, caractérisé en ce que le plateau (9) est disposé sur le stator par le moyen d'un corps cylindrique (8) enfoncé à force dans l'alésage statorique (33), le plateau (9) et le corps (8) constituant une matrice de formage (100) du chignon supérieur (3) de sortie des extrémités des fils de bobine (20-27).

3. Moteur selon la revendication 1, caractérisé en ce que le plateau (9) porte un bornier (10) support des extrémités des fils (20-27) du bobinage.

4. Moteur selon la revendication 1, caractérisé en ce que les extrémités des fils (20-27) sont portées sur le plateau (9) par des moyens de maintien à partir de leur point de sortie le plus proche du chignon (3).

5. Moteur selon la revendication 4, caractérisé en ce que les moyens de maintien comportent des barres (28-30) percées de canaux de passage des fils (20-27) collées sur la surface extérieure du plateau (9).

6. Moteur selon la revendication 3, caractérisé en ce que le bornier (10) est relié à la coupelle (9) par un plateau coudé (31) relié à la base (19) du bornier, de façon à ramener la direction de connexion (81) des fils (20-27) parallèlement à l'axe de l'arbre moteur (5).

7. Moteur selon la revendication 3 ou 6, caractérisé en ce que le bornier (10) comporte un boîtier ouvert sur deux de ses grandes faces opposées et des moyens de maintien des extrémités (20-27) des fils statoriques.

8. Moteur selon la revendication 7, caractérisé en ce que le bornier (10) est réalisé en un matériau électriquement isolant et déformable à la chaleur, et en ce que les moyens de maintien comportent des canaux percés sur le plateau (31), sur la base (19) du bornier et sur la face opposée à la base (19) qui sont localement déformés à la chaleur de façon à constituer des recouvrements jointifs (37-38) des parois des canaux.

9. Moteur selon la revendication 3, caractérisé en ce que le bornier (10) reçoit un boîtier (51) muni de moyens de fixation au bornier (10), le boîtier (51) portant au moins une cosse (39) par fil isolé à relier, chaque cosse (39) comportant une première partie (40) de connexion par enlèvement disolant au fil isolé (27) et une seconde partie (41) de connexion par enfichage à un circuit imprimé (47).

10. Moteur selon la revendication 9, caractérisé en ce que les fils isolés (20-27) sont amenés au bornier (10) dans leur ordre naturel de sortie du chignon (3) et en ce que les connexions des bobines entre elles sont réalisées par le circuit imprimé (47).

11. Procédé de fabrication d'un moteur selon l'une des revendications 2, 3, 4, 9 ou 10, caractérisé en ce que les bobines sont insérées dans le stator, puis que le chignon (3) des sorties (20-27) des fils des bobines est formé par l'introduction à force dans l'alésage statorique (33) d'une matrice de formage (100) qui comporte un corps cylindrique (8) introduit dans l'alésage statorique (33) qui porte aussi un plateau (9) de formage du seul chignon (3), puis que les extrémités (20-27) des fils sont rangées sur le plateau (9) constituant la partie supérieure de la matrice de formage (100), puis qu'ils sont fixés à un bornier (10) lié au plateau (9), enfin, le bobinage étant imprégné, qu'un boîtier (51) porteur de cosses (39) est fixé au bornier (10), les cosses (39) étant reliées électriquement aux fils (20-27) et qu'un circuit imprimé (47), organe de changement des caractéristiques électromécaniques est enfiché dans le connecteur (10, 51).

**Patentansprüche**

1.- Elektromotor mit gewickeltem Stator, bei dem eine mit dem Stator fest verbundene Platte (9) an derjenigen Seite der Statorbohrung (33) angeordnet ist, an welcher die Drahtenden (20-27) austreten, dadurch gekennzeichnet, dass die Drähte (20-27) auf einer Oberfläche der Platte gespannt angeordnet sind, wobei die Platte (9) die Festlegung und/oder die Formung des Spulenkopfs (3) der austretenden Wicklungsdrähte besorgt.

2.- Motor nach Anspruch 1, dadurch gekennzeichnet, dass die platte (9) am Stator vermittels eines in die Statorbohrung (33) mit Kraftschluss eingesetzten Zylinderkörpers (8) angebracht ist, wobei die Platte (9) und der Körper (8) eine Formmatrize (100) für den oberen Spulenkopf (3) der austretenden Wicklungsdrahtenden (20-27) bilden.

3.- Motor nach Anspruch 1, dadurch gekennzeichnet, dass die platte (9) einen Klemmeinhalter (10) trägt, der die austretenden Wicklungsdrahtenden (20-27) stützt.

4.- Motor nach Anspruch 1, dadurch gekennzeichnet, dass die Drahtenden (20-27) von der Platte (9) durch Haltemittel von ihrer den Spulenkopf (3) nächstliegenden Austrittsstelle gestützt werden.

5.- Motor nach Anspruch 4, dadurch gekennzeichnet, dass die Haltemittel mit Durchlassbohrungen für die Drähte (20-27) versehene Stäbe (28-30) aufweisen, die auf die äussere Oberfläche der Platte (9) aufgeklebt sind.

6.- Motor nach Anspruch 3, dadurch gekennzeichnet, dass der Klenmenhalter (10) mit der Platte (9) über ein abgewinkeltes Plattenelement (31) verbunden ist, welches mit der Base (19) des Klemmenhalters verbunden ist, derart, dass die Richtung der Verbindung (81) der Drähte (20-27) wieder parallel zur Achse (5) des Motors verläuft.

7.- Motor nach Anspruch 3 oder 6, dadurch gekennzeichnet, dass der Klemmenhalter (10) ein an seinen beiden einander entgegengesetzten breiten Seiten offenes Gehäuse und Mittel zum Festlegen der Enden (20-27) der Statordrähte aufweist.

8.- Motor nach Anspruch 7, dadurch gekennzeichnet, dass der Klemmenhalter (10) aus einem elektrisch isolierenden und wärmeverformbaren Material besteht, und dass die Festlegemittel in dem Plattenelement (31) angeordnete Durchlässe umfassen, die an der Base (19) des Klemmenhalters und an der der Base entgegengestetzten Seite eingearbeitet sind und örtlich durch Wärmeeinwirkung verformt sind, derart, dass einander überlappende Teile (37-38) an den Wandungen der Durchlässe ausgebildet sind.

9.- Motor nach Anspruch 3, dadurch gekennzeichnet, dass der Klemmenhalter (10) ein mit zu seiner Befestigung an Klemmenhalter dienenden Mitteln versehenes Gehäuse (51) aufnimmt, welches wenigstens einen Kabelschuh (39) pro isoliertem Draht trägt, wobei jeder Kabelschuh (39) einen ersten, durch Entfernung der Isolierung vom isolierten Draht (27) hergestellten Verbindungsabschnitt, sowie einen zweiten, durch Einstecken in einen gedruckten Stromkreis (47) erzeugten Verbindungsabschnitt besitzt.

10.- Motor nach Anspruch 10. dadurch gekennzeichnet, dass die isolierten Drähte (20-27) in der natürlichen Reihenfolge ihres Austritts aus dem Spulenkopf (3) dem Klemmenhalter (10) zugeführt sind, und dass die Spulen untereinander durch den gedruckten Stromkreis (47) verbunden sind.

11.- Verfahren zur Herstellung eines Motors nach einen der Ansprüche 2, 3, 4, 9 und 10, dadurch gekennzeichnet, dass man die Spulen in den Stator einsetzt, dass man sodann den Spulenkopf (3) der Ausgänge (20-27) durch Zwangseinführung einer Formmatrize in die Statorbohrung (33) formt, wobei die Matrize einen Zylinderkörper (8) aufweist, der in die Statorbohrung (33) eingesetzt wird, die ferner mit einer Platte (9) zum Formen des einzigen Spulenkopfs (3) versehen ist, dass man dann die Drahtenden (20-27) auf der den oberen Teil der Formmatrize (100) bildenden Platte (9) anordnet, die man sodann an einem mit der Platte (9) verbundenen Klemmenhalter (10) befestigt, und dass man schliesslich nach Impregnierung der Spulenwicklung ein mit Kabelschuhen (39) versehenes Gehäuse (51) am Klemmenhalter (10) befestigt, wobei die Kabelschuhe (39) elektrisch mit den Drähten (20-27) verbunden werden, und dass man ferner ein als Organ zur Änderung der elektromechanischen Grössen dienenden gedruckten Stromkreis (47) in das Verbindungsorgan (10, 51) einsteckt.

## Claims

1.- Electric motor having a coiled stator and comprising a plate (9) integral with the stator, disposed on that side of the stator bore (33) on which the ends of the wires (20-27) emerge, characterized in that the wires (20-27) are stretched on one face of the plate, the plate (9) performing a function of maintaining and/or shaping the wire of the outgoing coil winding head (3).

2.- Motor according to claim 1. characterized in that the plate (9) is disposed on the stator by means of a cylindrical body (8) forcibly sunk into the stator bore (33), the plate (9) and the body (8) constituting a shaping die (100) for the upper outgoing winding head (3) of the coil wire ends (20-27).

3.- Motor according to claim 1, characterized in that the plate (9) bears a terminal holder (10) for supporting the coil wire ends (20-27).

4.- Motor according to claim 1, characterized in that the wire ends (20-27) are supported by the plate (9) through maintaining means form that one of their outgoing points which is closest to the winding head (3).

5.- Motor according to claim 4, characterized in that the maintaining means comprise bars (28-30) bored with passages for the wires (20-27) and bonded to the external surface of the plate (9).

6.- Motor according to claim 3, characterized in that the terminal holder (10) is connected to the plate (9) through a bent plate member (31) connected to the base (19) of the terminal holder, so as to confer again on the wires (20-27) a connecting direction (81) parallel to the axis of the motor shaft (5).

7.- Motor according to claim 3 or 6. characterized in that the terminal holder (10) comprises a housing open at two of its large opposite faces and means for maintaining the ends (20-27) of the stator wires.

8.- Motor according to claim 7, characterized in that the terminal holder (10) is made of electrically insulating and heat-deformable material, and in that the maintaining means comprise passages bored on the plate member (31), which are provided on the base (19) of the terminal support and on the face opposite the base (19), and which are locally deformed by the heat so as to constitute jointed overlapping portions (37-38) of the walls of the passages.

9.- Motor according to claim 3, characterized in that the terminal support (10) receives a housing (51) fitted with means for attaching the same to the terminal support (10), while the housing carries at least one terminal-conductor (39) per insulated wire to be connected, each terminal-conductor (39) comprising a first connecting part (40) obtained by removal of the insulation from the insulated wire (27) and a second connecting part (41) rendered effective by plugging into a printed circuit (47).

10.- Motor according to claim 9, characterized in that the insulated wires (20-27) are brought to the terminal support (10) in their original order of issue from the loop (3) and in that the connections of the windings between one another are achieved through the printed circuit (47).

11.- Process of manufacturing a motor according to one of claims 2, 3, 4, 9 or 10, characterized in that it comprises the steps of inserting the coils into the stator, then forming the winding head of the outgoing coil wires (20-27) by forcibly introducing into the stator bore (33) a shaping die (100) comprising a cylindrical body (8) introduced into the stator bore (33), which also bears a shaping plate (3) for shaping the single winding head, then arranging the ends (20-27) of the wires on the plate (9) constituting the upper part of the shaping die (200) and then attaching them to a terminal support (10) fixed to the plate (9), and finally, after impregnating the winding, attaching a housing (51) carrying terminal-conductors (39) to the terminal support (10), said terminal-conductors (39) being electrically connected to the wires (20-27), and plugging into the connector (10, 51) a printed circuit (47) which constitutes a member for changing the electromechanical characteristics.

0 095 958

# FIG_1

Fig_2

# FIG_3·a

# FIG_3·b